# EUROPEAN PATENT APPLICATION

(11) **EP 4 020 136 A1**
(43) Date of publication of application: **29.06.2022**
(21) Application number: 21190151.7
(22) Date of filing: 06.08.2021
(51) Int. Cl.: G06F 3/01

(54) **METHOD, SYSTEM AND NON-TRANSITORY COMPUTER-READABLE RECORDING MEDIUM FOR SUPPORTING OBJECT CONTROL**

(30) Priority: 14.08.2020 KR 20200102814; 21.09.2020 KR 20200121843; 14.01.2021 KR 20210005570
(71) Applicant: Vtouch Co., Ltd., Seoul 06044 (KR)
(72) Inventor: Kim, Seok Joong, 06608 Seoul (KR)
(74) Representative: RGTH

(57) **Abstract**

A method of assisting an object control is provided. The method includes:
determining an instruction vector with reference to at least one of whether or not a trigger event relating to a movement of a control means is generated and a distance between a motion coordinate of the control means and a control object region; and
determining, when a position of the control means is changed, a control position in the control object region with reference to a vector that connects a virtual reference point specified based on an extension line of the instruction vector before the position of the control means is changed and the motion coordinate of the control means after the position of the control means is changed.

## Description

### CROSS-REFERENCE TO RELATED APPLICATIONS

This application claims priority to Korean Patent Application No. 10-2020-0102814 filed on August 14, 2020, Korean Patent Application No. 10-2020-0121843 filed on September 21, 2020, and Korean Patent Application No. 10-2021-0005570 filed on January 14, 2021, the entire contents of which are herein incorporated by reference.

### TECHNICAL FIELD

The present disclosure relates to a method, system, and a non-transitory computer-readable recording medium for assisting object control.

### BACKGROUND

Inevitable contact may occur in the course of touching a display, pressing a button, and turning a switch on and off. A user may touch with his/her hand a place to which respiratory droplets sprayed from a person infected with a virus (e.g., COVID-19) adhere. In this case, when the user touches his/her own mucosa or conjunctiva with his/her hand, the user may be infected with the virus. In particular, through various devices such as touch displays, buttons, switches, and the like located in a public place, an unspecified number of people may come into contact with each another. This increases the risk of infection.

In recent years, various methods for controlling an object in a non-contact manner are proposed to solve such a problem.

As one example of such various methods in the prior art, the technique disclosed in Korean Laid-Open Patent Publication No. 2016-97410 may be exemplified. This technology relates to a motion recognition-based input interface for receiving information input from a user in a non-contact manner, which includes a display unit, a sensing unit provided with one or more sensing devices and configured to sense non-contact hand motions of the user via the sensing devices, a motion recognition unit configured to analyze non-contact sensing signals sensed by the sensing unit to generate non-contact motion recognition information, and a control unit configured to control the display unit to display an image controlled by the generated non-contact motion recognition information thereon.

However, in technologies introduced so far, including the aforementioned prior art, when a position of a control means (e.g., a hand, a fingertip) is changed, a control position (e.g., a cursor, a pointer) to be changed in a control object region is specified based on an instruction vector used to specify the control position in the control object region based on the position of the control means. In this case, in accordance with a positional relationship between the user and the control object region, the control position in the control object region may be moved more or less than an intention of the user. This makes it difficult for the user to perform intuitive control.

Based on the above findings, the inventor presents a novel and improved technology which is capable of enabling a user to perform intuitive control by specifying a vector for specifying a control position to be changed in a control object region based on an instruction vector when a position of a control means is changed, and specifying the control position to be changed in the control object region based on the specified vector.

### SUMMARY

One Object of the present disclosure is to solve all the above-described problems.

Another object of the present disclosure is to assist a user to intuitively and finely control a control position in a control object region.

Yet another object of the present disclosure is to dynamically determine an instruction vector for specifying a control position intended by a user.

Representative configurations of the present disclosure to achieve the above objects are described below.

According to one aspect of the present disclosure, there is provided a method of assisting an object control, the method including the steps of: determining an instruction vector with reference to at least one of whether or not a trigger event relating to a movement of a control means is generated and a distance between a motion coordinate of the control means and a control object region; and determining, when a position of the control means is changed, a control position in the control object region with reference to a vector which connects a virtual reference point specified based on an extension line of the instruction vector before the position of the control means is changed and a motion coordinate of the control means after the position of the control means is changed.

According to another aspect of the present disclosure, there is provided a method of assisting an object control, the method including the steps of: determining an instruction vector with reference to at least one of whether or not a trigger event relating to a movement of a control means is generated and a distance between a motion coordinate of the control means and a control object region; and determining, when a position of the control means is changed, a control position in the control object region with reference to the instruction vector which is corrected based on a relationship between a first guide vector specified with reference to the motion coordinate of the control means before the position of the control means is changed and a second guide vector specified with reference to a motion coordinate of the control means after the position of the control means is changed.

According to yet another aspect of the present disclosure, there is provided a system for assisting an object control, including: an instruction vector determination unit configured to determine an instruction vector with reference to at least one of whether or not a trigger event relating to a movement of a control means is generated and a distance between a motion coordinate of the control means and a control object region; and a control position management unit configured to determine, when a position of the control means is changed, a control position in the control object region with reference to a vector which connects a virtual reference point specified based on an extension line of the instruction vector before the position of the control means is changed and a motion coordinate of the control means after the position of the control means is changed.

According to still another aspect of the present disclosure, there is provided a system for assisting an object control, including: an instruction vector determination unit configured to determine an instruction vector with reference to at least one of whether or not a trigger event relating to a movement of a control means is generated and a distance between a motion coordinate of the control means and a control object region; and a control position management unit configured to determine, when a position of the control means is changed, a control position in the control object region with reference to the instruction vector which is corrected based on a relationship between a first guide vector specified with reference to the motion coordinate of the control means before the position of the control means is changed and a second guide vector specified with reference to a motion coordinate of the control means after the position of the control means is changed.

Further, there is provided another method, another system for implementing the present disclosure, and a non-transitory computer-readable recording medium having stored thereon computer programs for executing the aforementioned methods.

According to the present disclosure, it becomes possible for a user to intuitively and finely control a control position in a control object region.

Further, according to the present disclosure, it is possible to dynamically determine an instruction vector for specifying a control position intended by a user.

### BRIEF DESCRIPTION OF THE DRAWINGS

FIG. 1 illustratively shows a detailed internal configuration of an object control assistance system according to one embodiment of the present disclosure.
FIG. 2 illustratively shows a process of dynamically determining an instruction vector based on a distance between a motion coordinate of a control means and a control object region according to one embodiment of the present disclosure.
FIG. 3 illustratively shows a process in which a control position is changed in a control object region according to one embodiment of the present disclosure.
FIG. 4 illustratively shows a process in which a control position is changed in a control object region according to one embodiment of the present disclosure.
FIG. 5 illustratively shows a process in which a control position is changed in a control object region according to one embodiment of the present disclosure.
FIG. 6 illustratively shows a process in which a control position is changed in a control object region according to one embodiment of the present disclosure.
FIG. 7 illustratively shows a process of determining a motion vector according to one embodiment of the present disclosure.
FIG. 8 illustratively shows a process of determining a motion vector according to one embodiment of the present disclosure.
FIG. 9 illustratively shows a process of determining a motion vector according to one embodiment of the present disclosure.
FIG. 10 illustratively shows a process of determining a motion vector according to one embodiment of the present disclosure.
FIG. 11 illustratively shows a process of determining a motion vector according to one embodiment of the present disclosure.
FIG. 12 illustratively shows a process of determining a motion vector according to one embodiment of the present disclosure.
FIG. 13 illustratively shows a process of specifying the control position in the control object region based on the instruction vector according to one embodiment of the present disclosure.
FIG. 14 illustratively shows a process of specifying the control position in the control object region based on the instruction vector according to one embodiment of the present disclosure.
FIG. 15 illustratively shows control positions changed depending on the instruction vector in the control object region according to one embodiment of the present disclosure.

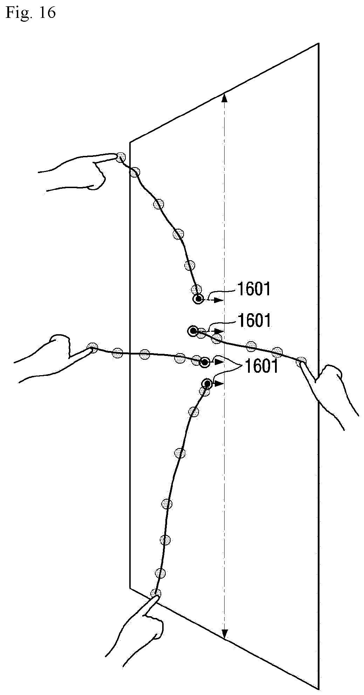

FIG. 16 illustratively shows a process of determining a vertical vector according to one embodiment of the present disclosure.
FIG. 17 illustratively shows a process of specifying a virtual reference point according to one embodiment of the present disclosure.
FIG. 18 illustratively shows a process of specifying a virtual reference point according to one embodiment of the present disclosure.
FIG. 19 illustratively shows a process of specifying a virtual reference point according to one embodiment of the present disclosure.
FIG. 20 illustratively shows a process of specifying a virtual reference point according to one embodiment of the present disclosure.

### DETAILED DESCRIPTION

In the following detailed description of the present disclosure, references are made to the accompanying drawings that show, by way of illustration, specific embodiments in which the present disclosure may be practiced. These embodiments are described in sufficient detail to enable those skilled in the art to practice the present disclosure. It is to be understood that the various embodiments of the present disclosure, although different from each other, are not necessarily mutually exclusive. For example, specific shapes, structures and characteristics described herein may be implemented as modified from an embodiment to another without departing from the spirit and scope of the present disclosure. Furthermore, it shall be understood that the positions or arrangements of individual elements within each of the embodiments may also be modified without departing from the spirit and scope of the present disclosure. Therefore, the following detailed description is not to be taken in a limiting sense, and the scope of the present disclosure is to be taken as encompassing the scope of the appended claims and all equivalents thereof. In the drawings, like reference numerals refer to the same or similar elements throughout the several views.

Hereinafter, various preferred embodiments of the present disclosure will be described in detail with reference to the accompanying drawings to enable those skilled in the art to easily implement the present disclosure.

### Configuration of object control assistance system

An internal configuration of an object control assistance system 100 crucial for implementing the present disclosure and functions of respective components thereof will be described.

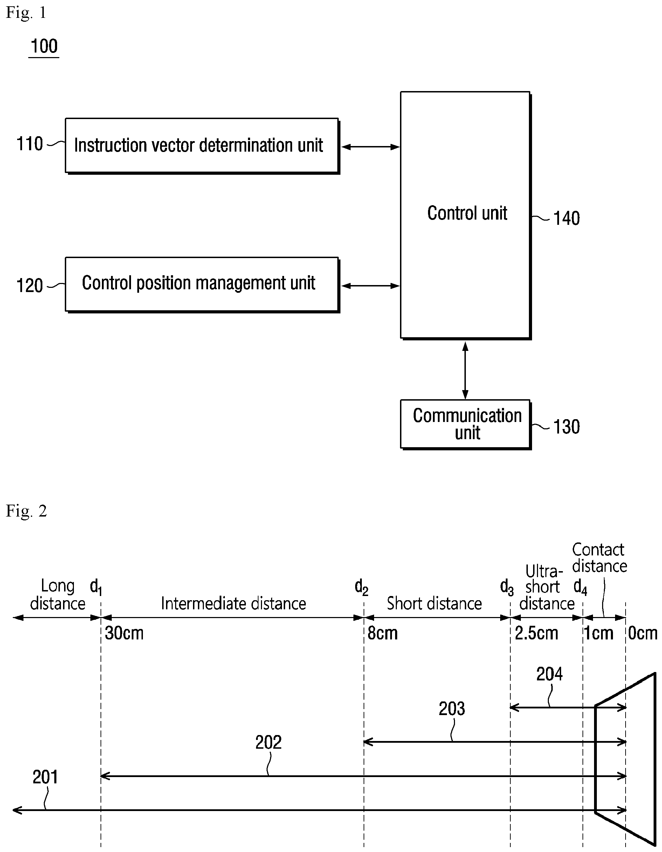

FIG. 1 illustratively shows an internal configuration of the object control assistance system 100 according to one embodiment of the present disclosure.

Referring to FIG. 1, the object control assistance system 100 according to one embodiment of the present disclosure may include an instruction vector determination unit 110, a control position management unit 120, a communication unit 130, and a control unit 140. Further, according to one embodiment of the present disclosure, at least some of the instruction vector determination unit 110, the control position management unit 120, the communication unit 130, and the control unit 140 may be program modules to communicate with an external system (not shown). Such program modules may be included in the object control assistance system 100 in the form of operating systems, application program modules, and other program modules, while they may be physically stored in a variety of commonly known storage devices. Further, the program modules may also be stored in a remote storage device that may communicate with the object control assistance system 100. Meanwhile, such program modules may include, but not limited to, routines, subroutines, programs, objects, components, data structures, and the like for performing specific tasks or executing specific abstract data types as will be described below according to the present disclosure.

Although the object control assistance system 100 is described as above, such a description is an example. As will be understood by those skilled in the art, at least some of the components or functions of the object control assistance system 100 may be implemented inside or included in a device (to be described below) as needed. In addition, in some cases, all functions and all components of the object control assistance system 100 may be executed entirely inside the device or may be included entirely in the device.

The device according to one embodiment of the present disclosure is a digital device having a memory means and a microprocessor for computing capabilities, and may include a wearable device such as smart glasses, a smart watch, a smart band, a smart ring, a smart necklace, a smart earset, a smart earphone, a smart earring, or the like, or a somewhat traditional device such as a smart phone, a smart pad, a desktop computer, a server, a notebook computer, a workstation, a personal digital assistant (PDA), a web pad, a mobile phone, a remote controller, or the like. The device may be changed in various forms at such a level that can achieve the objects of the present disclosure as well as the foregoing examples. Further, the device according to one embodiment of the present disclosure may include a camera module (not shown) for capturing an image of a control means (e.g., a pointer held by a user, eyes or fingertip of the user, etc.), or may be in communication with the camera module or other device provided with the camera module via a known communication network.

Further, the aforementioned device according to one embodiment of the present disclosure may include an application for assisting an object control according to the present disclosure. Such an application may be downloaded from an external distribution server (not shown). Further, features of the program modules may be generally similar to those of the instruction vector determination unit 110, the control position management unit 120, the communication unit 130, and the control unit 140 of the object control assistance system 100, which will be described below. Here, at least a portion of the application may be replaced with a hardware device or a firmware device that may perform a substantially same or equivalent function, as necessary.

The instruction vector determination unit 110 according to one embodiment of the present disclosure may perform a function of determining an instruction vector with reference to at least one of whether or not a trigger event relating to movement of a control means is generated, and a distance between a motion coordinate of the control means and the control object region. The trigger event relating to the movement of the control means according to one embodiment of the present disclosure may include changing a direction of the movement of the control means, stopping the movement of the control means, and the like. More specifically, the trigger event may include an event in which the control means moves forward and then moves backward, or an event in which the control means moves forward and then stops. Directions of the movements such as the forward movement and the backward movement may be specified based on the control object region, a specific body portion (e.g., eye(s)) of a user, or a virtual reference point to be described later. Here, the control object region according to one embodiment of the present disclosure may mean a region on which at least one object controllable by the user is displayed.

As an example, when the trigger event relating to the movement of the control means is generated, the instruction vector determination unit 110 may: determine a first coordinate with reference to, as a trigger coordinate, a coordinate at a time point when the trigger event relating to the movement of the control means is generated among motion coordinates of the control means; determine a second coordinate with reference to at least one of a distance between the trigger coordinate and the motion coordinates, a straight line section specified by the trigger coordinate and the motion coordinates, a distance between the first coordinate and the motion coordinates, and a straight line section specified by the first coordinate and the motion coordinates; and determine, as the instruction vector, a vector (hereinafter referred to as a "motion vector") determined based on the first coordinate and the second coordinate. More specifically, the instruction vector determination unit 110 may determine the motion vector using the second coordinate as a start point and the first coordinate as an end point. Details of a manner of determining the motion vector will be described later.

As another example, when the distance between the motion coordinates of the control means and the control object region is equal to or less than a predetermined level (e.g., 2.5 cm) or when the trigger event relating to the movement of the control means is generated and the motion vector is invalid, the instruction vector determination unit 110 may determine, as the instruction vector, a vector (hereinafter referred to as a "vertical vector") that passes through the trigger coordinate or the first coordinate and is perpendicular to the control object region.

More specifically, in the case that a trigger event in which the control means moves forward and then stops is generated, the distance between the first coordinate (or the motion coordinate of the control means) and the control object region falls within a predetermined range (more specifically, 1 cm to 2.5 cm), and the motion vector is invalid, the instruction vector determination unit 110 may determine, as the instruction vector, a vector that passes through the first coordinate and is perpendicular to the control object region (e.g., a vector having the first coordinate as a start point, and a certain point of the control object region which is positioned at the shortest distance from the first coordinate as an end point). Further, in the case that a trigger event in which the control means moves forward and then moves backward is generated, the distance between the first coordinate (or the motion coordinate of the control means) and the control object region falls within the predetermined range (more specifically, 1 cm to 2.5 cm), and the motion vector is invalid, the instruction vector determination unit 110 may determine, as the instruction vector, a vector that passes through the trigger coordinate and is perpendicular to the control object region (e.g., a vector having the trigger coordinate as a start point, and a point of the control object region which is positioned at the shortest distance from the first coordinate as an end point). Furthermore, in the case that the distance between the first coordinate (or the motion coordinate of the control means) and the control object region falls within a predetermined range (more specifically, 0 cm to 1 cm) and the motion vector is invalid, the instruction vector determination unit 110 may determine, as the instruction vector, a vector that passes through the first coordinate and is perpendicular to the control object region (e.g., a vector having the first coordinate as a start point and a certain point of the control object region which is positioned at the shortest distance from the first coordinate as an end point).

As yet another example, in the case that the distance between the motion coordinate of the control means and the control object region is equal to or greater than a predetermined level (e.g., 8 cm), the instruction vector determination unit 110 may determine, as the instruction vector, a vector (hereinafter referred to as a "pointing vector") specified based on the motion coordinate of the control means and a coordinate of a body portion of the user (e.g., a vector having the coordinate of the body portion of the user as a start point and the motion coordinate of the control means as an end point). Examples of the coordinate of the body portion of the user in one embodiment of the present disclosure may include coordinates relating to various body portions, such as the eye(s) (e.g., dominant eye, binocular eye, or the like), head, hand(s), fingertip(s), and the like of the user. When the control means according to one embodiment of the present disclosure is a specific body portion of the user, the instruction vector may be determined based on the specific body portion and another body portion of the user, which is different from the specific body portion.

More specifically, in the case in which the control means is the fingertip of the user, when a distance between a motion coordinate of the fingertip of the user and the control object region is equal to or greater than 8 cm, the instruction vector determination unit 110 may determine, as the instruction vector, a vector having a coordinate of the eye (specifically, the dominant eye) of the user as a start point and the motion coordinate of the fingertip as an end point.

FIG. 2 illustratively shows a process of dynamically determining the instruction vector based on the distance between the motion coordinate of the control means and the control object region according to one embodiment of the present disclosure.

Referring to FIG. 2, first, when the motion coordinate of the control means according to one embodiment of the present disclosure is a coordinate of the fingertip (i.e., a first body coordinate) and the motion coordinate of the control means exist at a second distance (e.g., 8 cm) or more from the control object region, vectors 201 and 202 that are specified based on the coordinate of the fingertip of the user (i.e., the first body coordinate) and a coordinate of the eye of the user (i.e., a second body coordinate) may be determined as the instruction vector. For example, when the motion coordinate of the control means exist at a first distance (e.g., 30 cm) or more from the control object region, the vector 201 that connects the coordinate of the fingertip of the user (i.e., the first body coordinate) and the coordinate of the dominant eye of the user (i.e., the second body coordinate) may be determined as the instruction vector. When the motion coordinate of the control means exist at the second distance (e.g., 8 cm) or more from the control object region and at the first distance (e.g., 30 cm) or less from the control object region, (i) the vector 201 that connects the coordinate of the fingertip of the user (i.e., the first body coordinate) and the coordinate of the dominant eye of the user (i.e., the second body coordinate) or (ii) the vector 202 that connects the coordinate of the fingertip of the user (i.e., the first body coordinate) and a coordinate of the center of the binocular eye of the user (i.e., the second body coordinate) may be determined as the instruction vector.

Further, according to one embodiment of the present disclosure, when the motion coordinate of the control means exist at a third distance (e.g., 2.5 cm) or more and less than the second distance (e.g., 8 cm) from the control object region, any one of the vectors 201 and 202 specified based on the coordinate of the fingertip of the user (i.e., the first body coordinate) and the coordinate of the eye of the user (i.e., the second body coordinate) and a motion vector 203 may be determined as the instruction vector. For example, when the vectors 201 and 202 specified based on the coordinate of the fingertip of the user (i.e., the first body coordinate) and the coordinate of the eye of the user (i.e., the second body coordinate) is determined, the vectors 201 and 202 specified based on the coordinate of the fingertip of the user (i.e., the first body coordinate) and the coordinate of the eye of the user (i.e., the second body coordinate) may be determined as the instruction vector. When the vectors 201 and 202 specified based on the coordinate of the fingertip of the user (i.e., the first body coordinate) and the coordinate of the eye of the user (i.e., the second body coordinate) is not determined or is invalid, the motion vector 203 may be determined as the instruction vector.

Further, according to one embodiment of the present disclosure, when the motion coordinate of the control means exist in a range less than the third distance (e.g., 2.5 cm) from the control object region, any one of the vectors 201 and 202 specified based on the coordinate of the fingertip of the user (i.e., the first body coordinate) and the coordinate of the eye of the user (i.e., the second body coordinate), the motion vector 203, and a vertical vector 204 may be determined as the instruction vector. For example, when the vectors 201 and 202 specified based on the coordinate of the fingertip of the user (i.e., the first body coordinate) and the coordinate of the eye of the user (i.e., the second body coordinate) is determined, the vectors 201 and 202 specified based on the coordinate of the fingertip of the user (i.e., the first body coordinate) and the coordinate of the eye of the user (i.e., the second body coordinate) may be determined as the instruction vector. When the vectors 201 and 202 specified based on the coordinate of the fingertip of the user (i.e., the first body coordinate) and the coordinate of the eye of the user (i.e., the second body coordinate) are not determined or are invalid, the motion vector 203 may be determined as the instruction vector. Further, when the vectors 201 and 202 specified based on the coordinate of the fingertip of the user (i.e., the first body coordinate) and the coordinate of the eye of the user (i.e., the second body coordinate) and the motion vector 203 are not determined or are invalid, the vertical vector 204 (e.g., a vector passing through the trigger coordinate or the first coordinate), which is perpendicular to the control object region, may be determined as the instruction vector.

The control position management unit 120 according to one embodiment of the present disclosure may perform a function of determining, when a position of the control means is changed, a control position in the control object region with reference to a vector (hereinafter referred to as a "connection vector") that connects a virtual reference point specified based on an extension line of the instruction vector before a position of the control means is changed and a motion coordinate of the control means after the position of the control means is changed.

As an example, when the position of the control means is changed, the control position management unit 120 may specify, as the virtual reference point, a certain point existing on an extension line of the instruction vector in a direction opposite to a direction in which the instruction vector is oriented before the position of the control means is changed, and determine a vector that connects the virtual reference point and the motion coordinate of the control means after the position of the control means is changed. Further, the control position management unit 120 may determine, as the control position, a point (or region) where an extension line of the connection vector and the control object region intersect with each other.

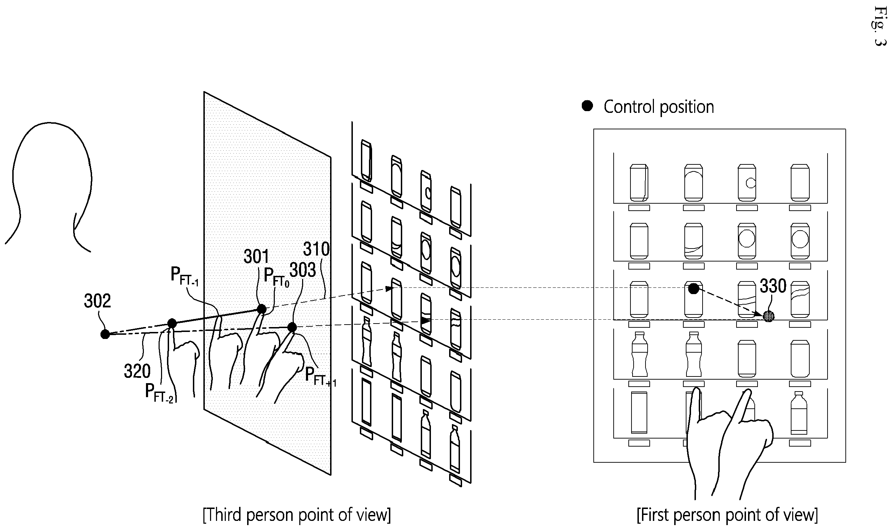

More specifically, as shown in FIG. 3, when the instruction vector is the motion vector and the position of the control means is changed, the control position management unit 120 may specify, as a virtual reference point 302, a point spaced apart by a distance of 40 to 50 cm from a motion vector 310 (e.g., from a start point or end point of the motion vector 310) among points existing on an extension line of the motion vector 310 in a direction opposite to the direction in which the motion vector 310 is oriented before the position of the control means is changed (at a point 301), and may determine a vector 320 (i.e., the connection vector) that connects the virtual reference point 302 and a motion coordinate 303 of the control means after the position of the control means is changed. Further, the control position management unit 120 may determine, as a control position 330, a point at which the vector 320 or an extension line of the vector 320 and the control object region intersect with each other.

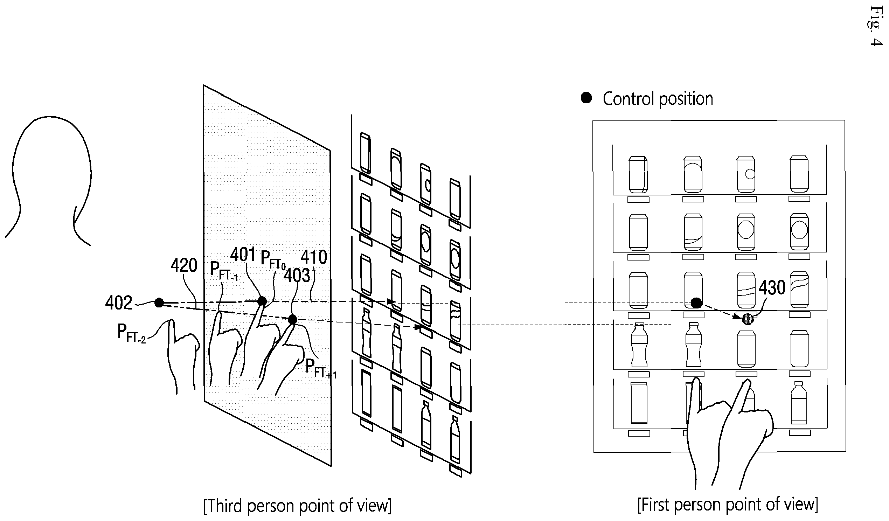

In some embodiments, as shown in FIG. 4, when the instruction vector is the vertical vector and the position of the control means is changed, the control position management unit 120 may specify, as a virtual reference point 402, a point spaced apart by a distance of 40 to 50 cm from a vertical vector 410 (e.g., from a start point or end point of the vertical vector 410) among points existing on an extension line of the vertical vector 410 in a direction opposite to a direction in which the vertical vector 410 is oriented before the position of the control means is changed (at a point 401), and may determine a vector 420 (i.e., the connection vector) that connects the virtual reference point 402 and a motion coordinate 403 of the control means after the position of the control means is changed. Further, the control position management unit 120 may determine, as a control position 430, a point at which the vector 420 or an extension line of the vector 420 and the control object region intersect with each other.

In some embodiments, when a position of the control means is changed, the control position management unit 120 may perform a function of determining a control position in the control object region with reference to an instruction vector corrected based on a relationship (e.g., positional relationship) between a first guide vector specified with reference to a motion coordinate of the control means before the position of the control means is changed, and a second guide vector specified with reference to a motion coordinate of the control means after the position of the control means is changed.

As an example, when the position of the control means is changed, based on a change in position or direction between the first guide vector specified with reference to the motion coordinate of the control means before the position of the control means is changed and the second guide vector specified with reference to a motion coordinate of the control means after the position of the control means is changed, the control position management unit 120 may correct the instruction vector in a parallel movement manner [e.g., parallel movement by an amount of change in positions between the first guide vector and the second guide vector (more specifically, positions between end points or start points of the first guide vector and the second guide vector)] or a direction in which the instruction vector is oriented (e.g., direction corresponding to a change in direction or angle between the first guide vector and the second guide vector). Further, the control position management unit 120 may determine, as the control position, a point (or region) at which the corrected instruction vector or an extension line of the corrected instruction vector and the control object region intersect with each other. These guide vectors may be vectors that are set to specify a direction associated with the control means (or the control intention of the user). For example, the guide vectors may be vectors specified by connecting the motion coordinate of the control means and other coordinates of the control means associated with the respective motion coordinate. More specifically, when the motion coordinate of the control means is a coordinate of the tip of the index finger of the user, a vector (e.g., finger vector) having the tip of the index finger as an end point and a coordinate of a node (or joint) of the index finger as a start point may be specified as the guide vector. Alternatively, when the motion coordinate of the control means is a coordinate of the center of the palm, a vector having the tip of the index finger as an end point and the coordinate of the center of the palm as a start point may be specified as the guide vector. Herein, it should be noted that the other coordinates described in the above embodiment of the present disclosure are not necessarily limited to those of the control means, but may also be coordinates of other control means adjacent to the control means.

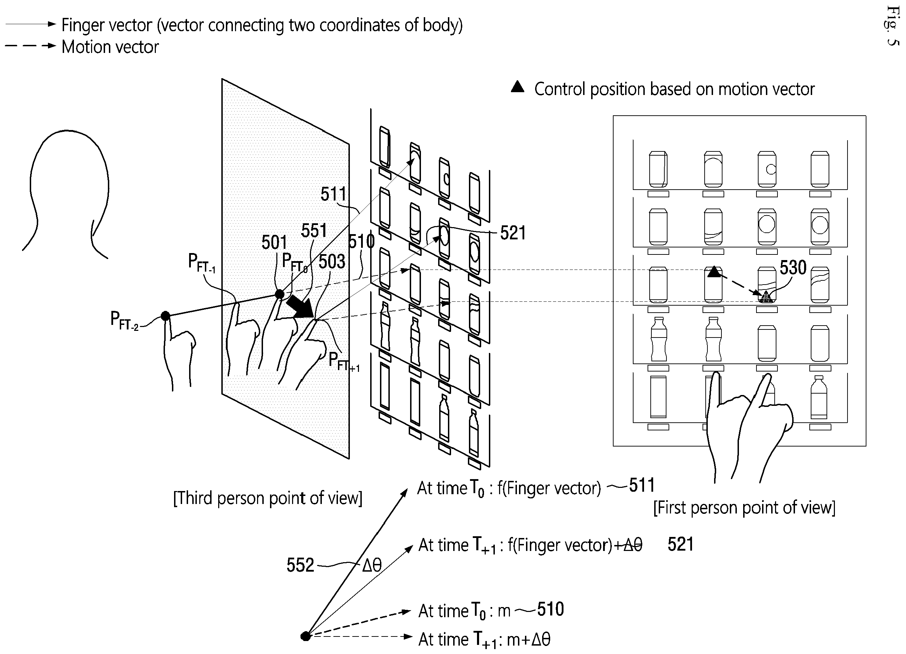

More specifically, as shown in FIG. 5, when the instruction vector is a motion vector 510 and the position of the control means is changed, by referring to an amount of change 551 in position and an amount of change 552 in direction between a first finger vector 511 as a guide vector (e.g., a vector having a coordinate of the tip of the index finger as an end point and a coordinate of the node of the index finger as a start point) specified with reference to a motion coordinate 501 (e.g., the coordinate of the tip of the index finger) of the control means before the position of the control means is changed, and a second finger vector 521 specified with reference to a motion coordinate 503 of the control means after the position of the control means is changed, the control position management unit 120 may determine a corrected motion vector by moving the motion vector 510 in parallel (e.g., moving the motion vector 510 by the amount of the positional change 551 in parallel) and correcting a direction in which the motion vector 510 is oriented (e.g., changing a rotational direction by the amount of the directional change 552). Further, the control position management unit 120 may determine, as a control position 530, a point at which the corrected motion vector or an extension line of the corrected motion vector and the control object region intersect with each other.

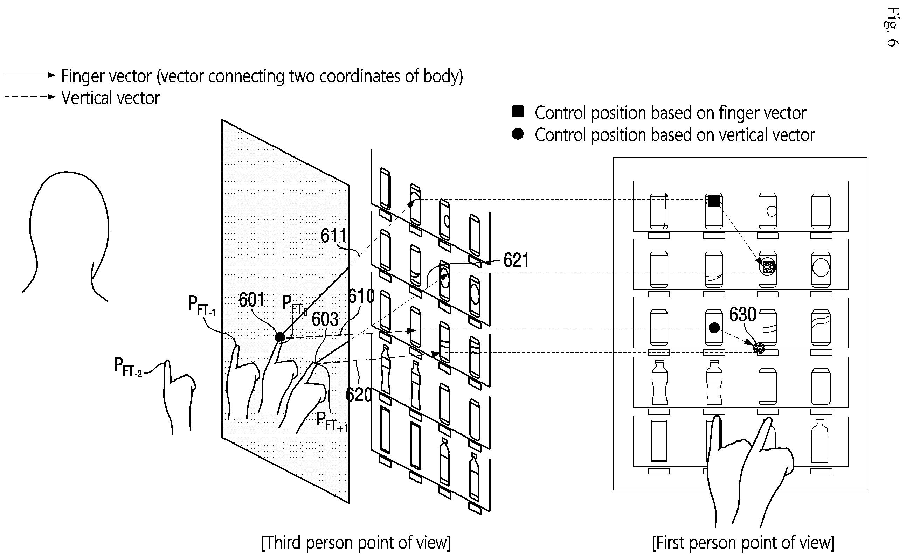

As shown in FIG. 6, when the instruction vector is a vertical vector 610 and the position of the control means is changed, by referring to amount of changes in position and direction between a first finger vector 611 as a guide vector (e.g., a vector having a coordinate of the tip of the index finger as an end point and a coordinate of the node of the index finger as a start point) specified with reference to a motion coordinate 601 of the control means (e.g., the coordinate of the tip of the index finger) before the position of the control means is changed, and a second finger vector 621 specified with reference to a motion coordinate 603 of the control means after the position of the control means is changed, the control position management unit 120 may determine a corrected vertical vector 620 by moving the vertical vector 610 in parallel (e.g., moving the vertical vector 610 by the amount of the positional change in parallel) and correcting a direction in which the vertical vector 610 is oriented (e.g., changing a rotational direction by the amount of the directional change). Further, the control position management unit 120 may determine, as a control position 630, a point at which the corrected vertical vector 620 or an extension line of the corrected vertical vector 620 and the control object region intersect with each other.

In some embodiments, a case in which the direction of the control means is further changed may be considered. The direction of the control means referred to herein means a direction associated with the control intended by the user, and may be specified based on a motion coordinate of the control means and other coordinates of the control means associated with the respective motion coordinate, or may be specified based on a shape of the control means. For example, when the motion coordinate of the control means is a coordinate of the tip of the index finger, a direction indicted by the index finger may be the direction of the control means. The direction of the control means may be the same as that of the guide vector described above, but may be set to be different from that of the guide vector as needed.

As an example, according to one embodiment of the present disclosure, when the position and the direction of the control means are changed, the control position management unit 120 may perform a function of determining a control position in the control object region by referring to an instruction vector corrected based on a relationship (e.g., positional relationship or directional relationship) between a first guide vector specified with reference to the motion coordinate of the control means and the direction of the control means before the position and the direction of the control means are changed (e.g., specified using a motion coordinate of the control means as a start point and a point that extends in a direction equal to or parallel to the direction of the control means and meets the control object region as an end point before the position and the direction of the control means are changed, or specified by extending by a predetermined length in a direction equal to or parallel to the direction of the control means using a motion coordinate of the control means as a start point before the position and the direction of the control means are changed), and a second guide vector specified with reference to the motion coordinate of the control means and the direction of the control means after the position and the direction of the control means are changed (e.g., specified using a motion coordinate of the control means as a start point and a point that extends in a direction equal to or parallel to the direction of the control means and meets the control object region as an end point after the position and the direction of the control means are changed, or specified by extending by a predetermined length in a direction equal to or parallel to the direction of the control means using the motion coordinate of the control means as a start point before the position and the direction of the control means are changed).

In some embodiments, the control position management unit 120 may determine a vector to be used for object control by the user among the aforementioned connection vector and the aforementioned corrected instruction vector with reference to an object control pattern of the user (or a preference control pattern of the user), and may determine, as the control position, a point at which an extension line of the vector and the control object region intersect with each other.

As an example, the control position management unit 120 may determine, as the vector to be used for object control by the user, a vector frequently used more than a certain level by the user among the aforementioned connection vector and the aforementioned corrected instruction vector, a vector specified with reference to the feedback of the user (e.g., a vector specified to have high accuracy or satisfaction), or a vector specified by analyzing or learning a pattern used by the user.

According to an embodiment of the present disclosure, the communication unit 130 may function to enable data transmission and reception from/to the instruction vector determination unit 110 and the control position management unit 120.

According to an embodiment of the present disclosure, the control unit 140 may function to control data flow among the instruction vector determination unit 110, the control position management unit 120, and the communication unit 130. That is, the control unit 140 according to the present disclosure may control the flow of data into/out of the object control assistance system 100 or data flow among the respective components of the object control assistance system 100, such that the instruction vector determination unit 110, the control position management unit 120, and the communication unit 130 may carry out their particular functions, respectively.

### Process of determining motion vector

Hereinafter, a process of determining the motion vector will be described in detail.

The instruction vector determination unit 110 according to one embodiment of the present disclosure may perform a function of determining a first coordinate with reference to, as a trigger coordinate, a coordinate at a time point when a trigger event relating to movement of the control means is generated among motion coordinates of the control means.

As an example, the instruction vector determination unit 110 may determine, as the first coordinate, a coordinate (i.e., the trigger coordinate) at a time point when a trigger event in which the control means moves toward the control object region and then stops is generated among the motion coordinates of the control means.

As another example, when a trigger event in which the control means moves toward the control object region and then moves backward is generated, the instruction vector determination unit 110 may determine, as the first coordinate, a motion coordinate of the control means at a predetermined previous time (e.g., a time point just before the generation of the trigger event) with reference to a motion coordinate of the control means at a time point when the respective trigger event is generated, namely a trigger coordinate. The predetermined previous time referred to herein may be specified based on a capturing interval or a frame rate of a capturing module (e.g., a camera) that captures an image of the control means.

At the time point when the trigger event is generated, the control means may shake. In order to correct such a shake, the instruction vector determination unit 110 may determine the first coordinate with reference to at least one motion coordinate of the control means specified based on the trigger coordinate.

As an example, the instruction vector determination unit 110 may determine the first coordinate by statistically analyzing a plurality of motion coordinates of the control means specified for a predetermined period of time with reference to the time point when the trigger coordinate is specified. The statistical analysis according to one embodiment of the present disclosure may include analysis based on an average, weighted average, variance, standard deviation, and the like of the plurality of motion coordinates. More specifically, the instruction vector determination unit 110 may determine, as the first coordinate, a motion coordinate obtained by averaging the plurality of motion coordinates specified for 0.01 seconds to 0.1 seconds with reference to the time point when the trigger coordinate is specified.

As another example, the instruction vector determination unit 110 may determine the first coordinate by statistically analyzing the plurality of motion coordinates of the control means which exist within a predetermined distance from the trigger coordinate. More specifically, the instruction vector determination unit 110 may determine, as the first coordinate, a motion coordinate obtained by averaging the plurality of motion coordinates of the control means specified within a distance of 5 mm to 10 mm from the trigger coordinate.

In some embodiments, the instruction vector determination unit 110 may exclude at least one of the trigger coordinate described above and the motion coordinates within the predetermined distance from the trigger coordinate, from the subject of the statistical analysis.

As an example, when a trigger event in which the control means moves forward and then stops or moves forward and then moves backward is generated, a trigger coordinate specified with reference to the time point when the trigger event is generated, and a motion coordinate within a distance of 5 mm from the trigger coordinate may greatly shake. For this reason, the instruction vector determination unit 110 may exclude the trigger coordinate and the motion coordinate within the distance of 5 mm from the trigger coordinate, from the subject of the statistical analysis.

In some embodiments, the instruction vector determination unit 110 may determine a second coordinate with reference to a distance between the trigger coordinate or the first coordinate and the motion coordinates of the control means.

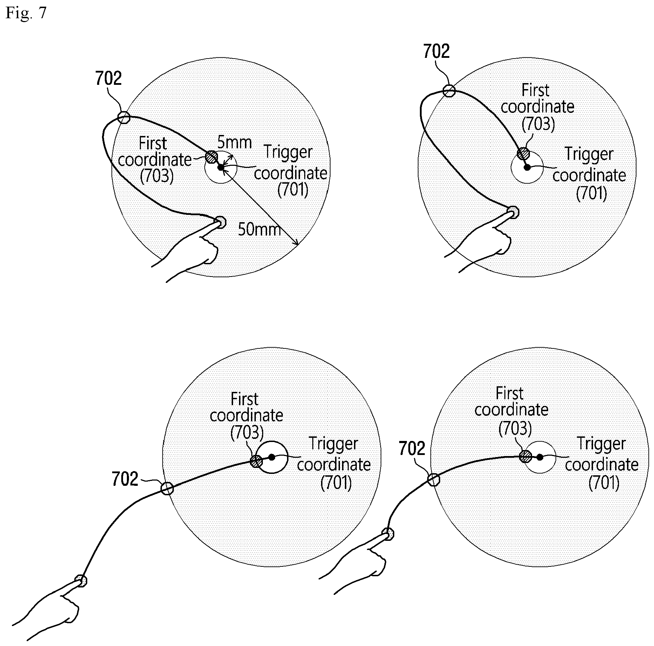

As an example, the instruction vector determination unit 110 may determine, as the second coordinate, a motion coordinate of the control means at a time point when the distance between the trigger coordinate or the first coordinate and the motion coordinates of the control means becomes equal to or greater than a predetermined level. More specifically, as shown in FIG. 7, the instruction vector determination unit 110 may determine, as the second coordinate, a motion coordinate 702 of the control means at a time point when a distance between a trigger coordinate 701 and the motion coordinates of the control means is equal to or greater than 40 mm to 50 mm.

As another example, the instruction vector determination unit 110 may determine, as the second coordinate, a motion coordinate at a time point closest to the time point when the first coordinate is specified, among the motion coordinates of the control means having a distance of equal to or greater than a predetermined level from the trigger coordinate. More specifically, as shown in FIG. 7, the instruction vector determination unit 110 may determine, as the second coordinate, the motion coordinate 702 at a time point closest to a time point when a first coordinate 703 is specified, among the motion coordinates of the control means having the distance of equal to or greater than 50 mm from the trigger coordinate 701.

In some embodiments, the instruction vector determination unit 110 may determine the second coordinate with reference to a straight line section specified by the trigger coordinate or the first coordinate and the motion coordinates of the control means.

As an example, the instruction vector determination unit 110 may determine, as the second coordinate, a motion coordinate existing at the farthest distance from the first coordinate (or the trigger coordinate) among the motion coordinates in a straight line section specified by connecting each of the motion coordinates of the control means at other time points, which are temporally adjacent to the time point when the first coordinate (or the trigger coordinate) is specified, with the first coordinate (or the trigger coordinate). In this case, when all the temporally-adjacent motion coordinates from the time point when the first coordinate (or the trigger coordinate) is specified to the above other time points, exist within a predetermined distance from the straight lines connecting the first coordinate (or the trigger coordinate) and the motion coordinates of the control means at the above other time points, the straight line sections may be specified.

More specifically, it is assumed that the time point when the first coordinate (or the trigger coordinate) is specified is a first time point, a motion coordinate of the control means at a second time point temporally adjacent to the first time point is a second motion coordinate, a motion coordinate of the control means at a third time point temporally adjacent to the second time point is a third motion coordinate, and a motion coordinate of the control means at a fourth time point temporally adjacent to the third time point is a fourth motion coordinate. In this case, when the second motion coordinate exists within a predetermined distance from a straight line which connects the first coordinate (or the trigger coordinate) and the third motion coordinate, the instruction vector determination unit 110 may specify the straight line section to consist of the first coordinate (or the trigger coordinate), the second motion coordinate and the third motion coordinate. Further, when both the second motion coordinate and the third motion coordinate exist within a predetermined distance from a straight line connecting the first coordinate (or the trigger coordinate) and the fourth motion coordinate, the instruction vector determination unit 110 may specify the straight line section to consist of the first coordinate (or the trigger coordinate), the second motion coordinate, the third motion coordinate and the fourth motion coordinate.

In some embodiments, the instruction vector determination unit 110 may specify the longest one among straight line sections that can be specified by connecting the motion coordinates of the control means at other time points, which are temporally adjacent to the time point when the first coordinate (or the trigger coordinate) is specified, with each other in a temporally-adjacent order, and may determine, as the second coordinate, a motion coordinate located at the farthest distance from the first coordinate (or the trigger coordinate) among the plurality of motion coordinates of the control means which exist in the longest straight line section. In some embodiments, distances between the plurality of motion coordinates of the control means which exist in the straight line section may fall within a predetermined range.

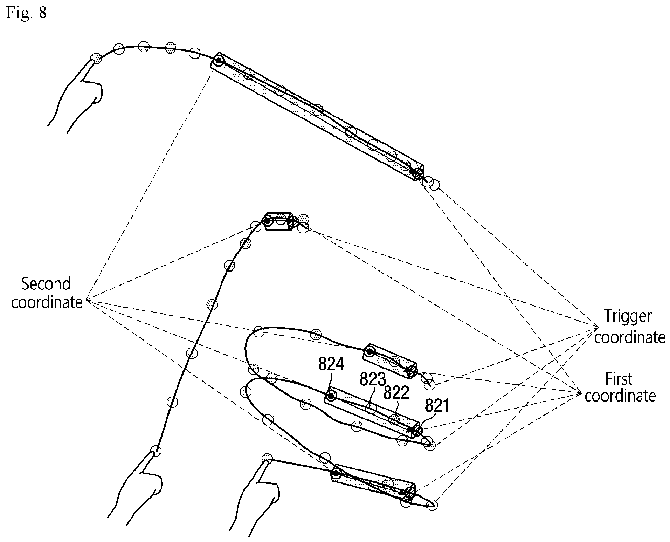

Further, as shown in FIG. 8, it is assumed that a time point when a first coordinate 821 is specified is a first time point, a motion coordinate of the control means at a second time point temporally adjacent to the first time point is a second motion coordinate 822, a motion coordinate of the control means at a third time point temporally adjacent to the second time point is a third motion coordinate 823, and a motion coordinate of the control means at a fourth time point temporally adjacent to the third time point is a fourth motion coordinate 824. In this case, the instruction vector determination unit 110 may determine, as specifiable straight line sections, a first straight line section which connects the first coordinate 821 and the second motion coordinate 822, a second straight line section which connects the first coordinate 821 and the third motion coordinate 823, and a third straight line section which connects the first coordinate 821 and the fourth motion coordinate 824, and may determine, as the second coordinate, the fourth motion coordinate 824 existing at the farthest distance from the first coordinate 821 among the plurality of motion coordinates in the third straight line section, which is the longest one among the plurality of specifiable straight line sections (i.e., the first straight line section, the second straight line section, and the third straight line section).

In some embodiments, the instruction vector determination unit 110 may determine, as the second coordinate, one closest to the first coordinate (or the trigger coordinate) among a coordinate determined with reference to a distance between the first coordinate (or the trigger coordinate) and motion coordinates of the control means, and a coordinate determined with reference to a straight line section specified by the first coordinate (or the trigger coordinate) and the motion coordinates of the control means.

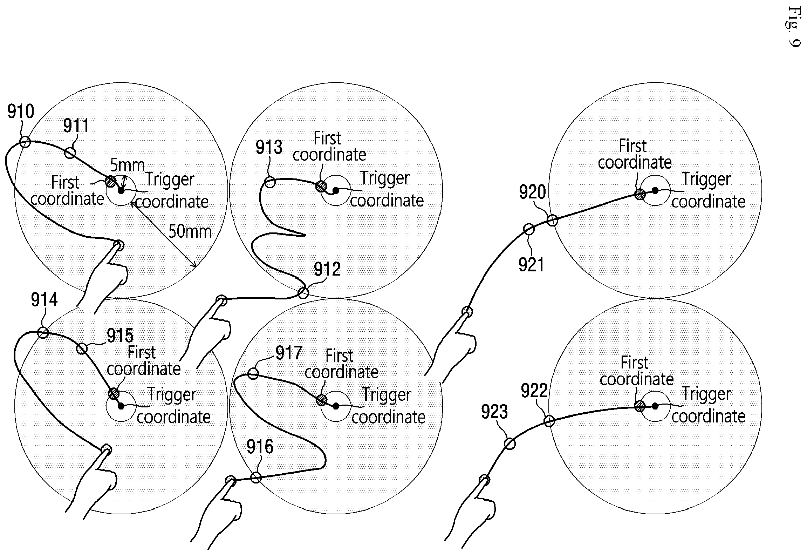

As an example, as shown in FIG. 9, the instruction vector determination unit 110 may determine, (i) motion coordinates 910, 912, 914, 916, 920, and 922 of the control means at a time point when a distance between the trigger coordinate and the motion coordinates of the control means becomes equal to or greater than a predetermined level, and (ii) motion coordinates 911, 913, 915, 917, 921, and 923 existing at the farthest distance from the first coordinate among motion coordinates in a straight line section that can be specified by connecting each of the motion coordinates of the control means at other time points temporally adjacent to the time point when the first coordinate is specified with the first coordinate described above, and may determine, as the second coordinate, the motion coordinates 911, 913, 915,917, 920, and 922 close to the first coordinate among the plurality of motion coordinates 910, 911, 912, 913, 914, 915, 916, 917, 920, 921, 922, and 923.

The instruction vector determination unit 110 may determine a motion vector based on the first coordinate and the second coordinate.

As an example, the instruction vector determination unit 110 may determine, as the motion vector, a vector having the second coordinate as a start point and the first coordinate as an end point.

In some embodiments, when there is no motion coordinate where a distance between the trigger coordinate or the first coordinate and the motion coordinates of the control means is equal to or greater than a predetermined level, the instruction vector determination unit 110 may determine that there is no specifiable motion vector.

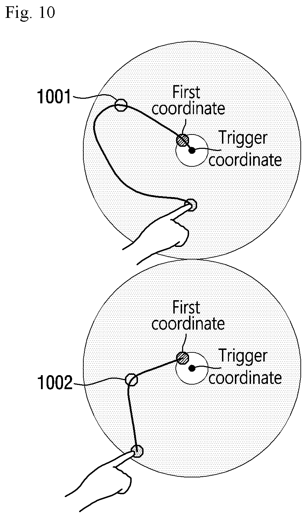

As an example, as shown in FIG. 10, even if second coordinates 1001 and 1002, which are determined with reference to a straight line section specified by the trigger coordinate or the first coordinate and the motion coordinates of the control means, can be specified, when second coordinates, which are determined with reference to a distance between the trigger coordinate or the first coordinate and the motion coordinates of the control means, cannot be specified, the instruction vector determination unit 110 may determine that there is no specifiable motion vector.

In some embodiments, the instruction vector determination unit 110 may verify the validity of the motion vector with reference to at least one of a length, speed, direction of the motion vector, and a position of the first coordinate.

As an example, when a length obtained by scaling the length of the motion vector by a predetermined factor is larger than a distance between the control object region and the first coordinate, the instruction vector determination unit 110 may determine the motion vector to be valid.

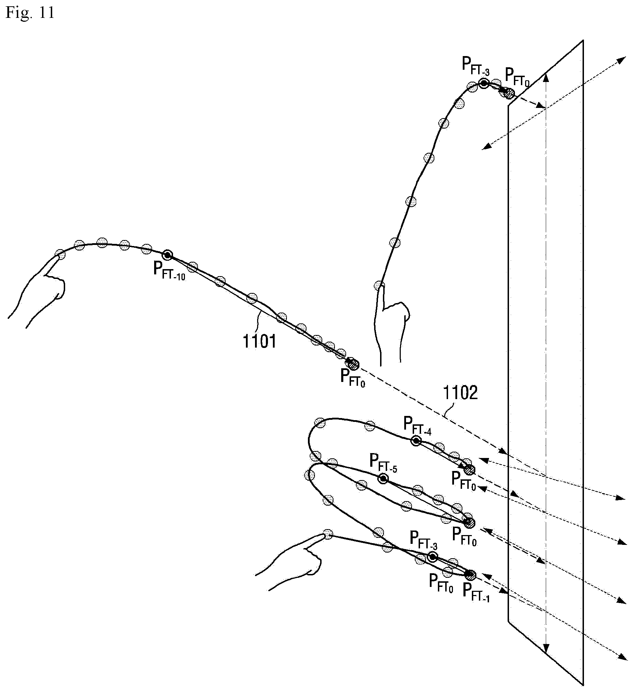

As another example, the instruction vector determination unit 110 may specify a valid region based on the length of the motion vector, and determine the motion vector to be valid when the control object region exists within the valid region. More specifically, as shown in FIG. 11, the instruction vector determination unit 110 may specify, as a valid region 1102, a region (or an extended region) obtained by scaling the length of the motion vector by a predetermined level, and determine the motion vector to be valid when there exists a region common to the valid region 1102 and the control object region.

As yet another example, the instruction vector determination unit 110 may determine the motion vector to be valid when the length of the motion vector is longer than a predetermined length (e.g., 10 mm to 20 mm).

As still another example, the instruction vector determination unit 110 may determine the motion vector to be valid when the speed of the motion vector is equal to or larger than a predetermined speed (e.g., 10 mm/sec to 20 mm/sec).

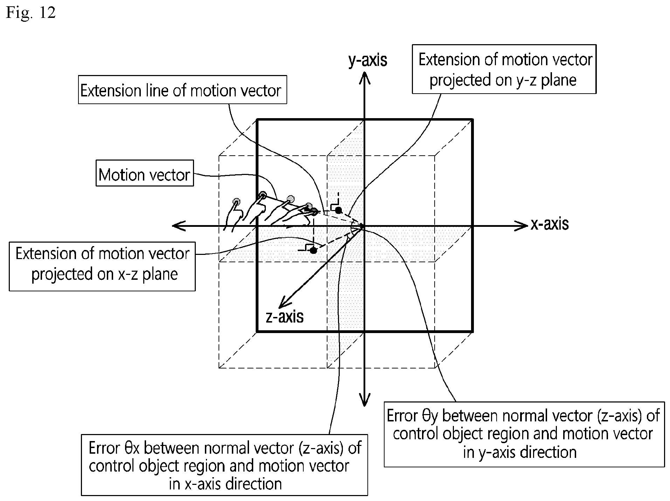

As still another example, as shown in FIG. 12, the instruction vector determination unit 110 may determine the motion vector to be valid when an angle between the motion vector and the control object region (specifically, an angle formed by a normal vector of the control object region) falls within a predetermined range (e.g., 45 degrees <θx < 45 degrees, and 30 degrees <θy < 60 degrees).

As yet still another example, the instruction vector determination unit 110 may determine the motion vector to be valid when the aforementioned first coordinate (i.e., the end point of the motion vector) exists within a predetermined distance (e.g., 100 mm) from the control object region.

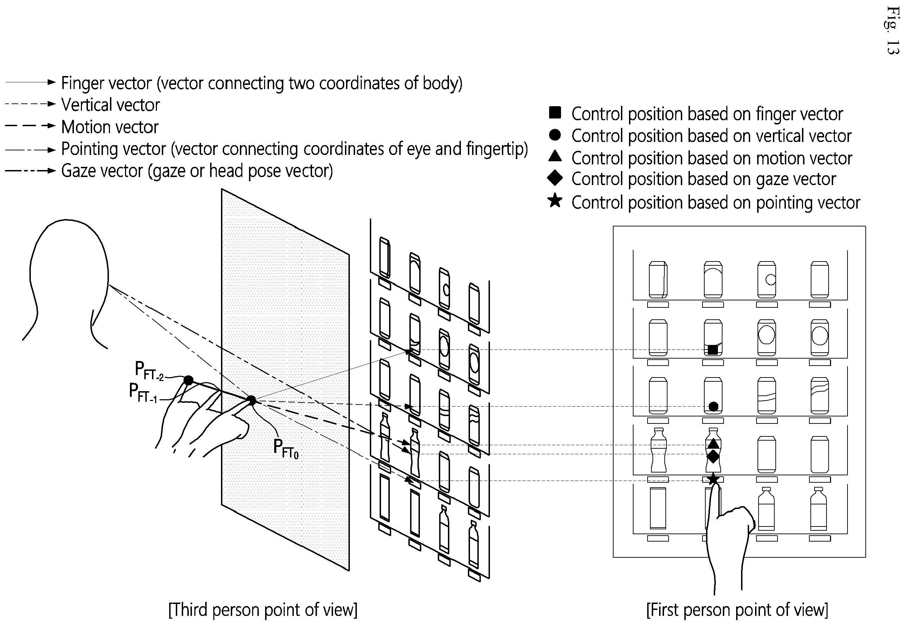

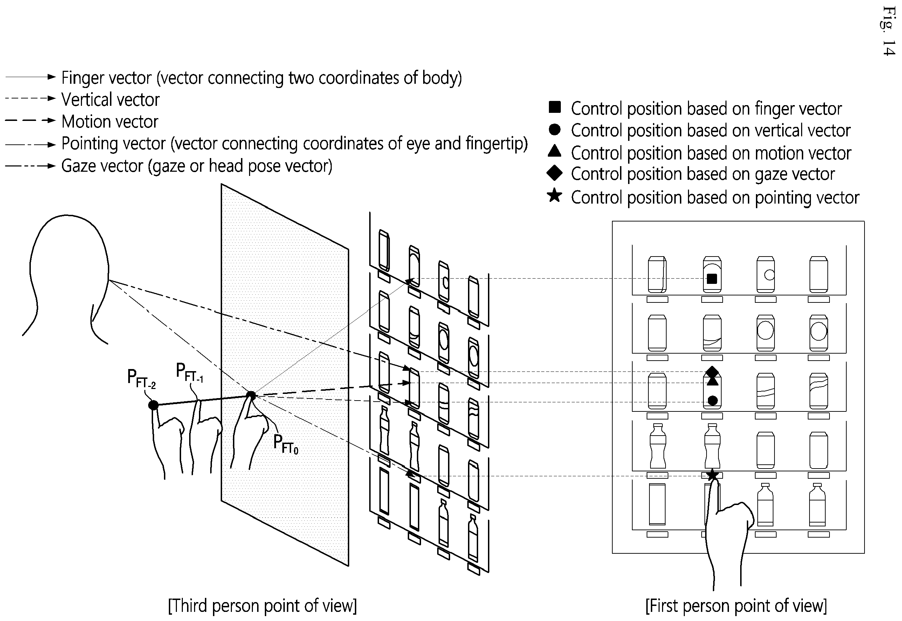

In some embodiments, as shown in FIGS. 13 and 14, the validity of the motion vector may be verified using a gaze vector specified by gaze of the user or pose of the head of the user.

As an example, when an error between a first control position specified in the control object region using the motion vector according to the present disclosure and a second control position specified in the control object region using the gaze vector specified by the gaze or the pose of the head of the user is equal to or less than a predetermined level, the motion vector may be determined as a valid motion vector.

### First embodiment

Hereinafter, a situation in which the object control according to the present disclosure is assisted to the user who uses the device including the object control assistance system 100 according to one embodiment of the present disclosure, will be described. The control means in one embodiment of the present disclosure may be the fingertip (e.g., tip of the index finger) of the user.

First, when a distance between a motion coordinate of the control means and a control object region is equal to or less than a predetermined level (e.g., 8 cm) and a trigger event relating to movement of the control means is generated, the device according to one embodiment of the present disclosure may determine a first coordinate with reference to, as a trigger coordinate, a coordinate at a time point when the trigger event in which the fingertip moves toward the control object region and then stops is generated among motion coordinates of the fingertip of the user.

As an example, when the trigger event in which the fingertip of the user moves toward the control object region and then stops is generated, a motion coordinate (i.e., the trigger coordinate) at the time point when the trigger event is generated among the motion coordinates of the fingertip of the user may be determined as the first coordinate.

Thereafter, the second coordinate may be determined with reference to a distance between the aforementioned trigger coordinate and the motion coordinate of the fingertip of the user, and a straight line section specified by the aforementioned first coordinate and the motion coordinates of the fingertip of the user.

Specifically, one close to the aforementioned first coordinate among coordinates determined with reference to the distance between the aforementioned trigger coordinate and the motion coordinates of the fingertip of the user, and a coordinate determined with reference to the straight line section specified by the first coordinate (or the trigger coordinate) and the motion coordinates of the fingertip of the user, may be determined as the second coordinate.

Subsequently, the validity of the motion vector may be verified with reference to at least one of the length, speed, direction of the vector (i.e., the motion vector) specified to have the second coordinate as a start point and the first coordinate as an end point and a position of the first coordinate.

Thereafter, when it is determined that the motion vector is valid, the motion vector may be determined as the instruction vector, and a region which meets an extension line of the motion vector in the control object region may be determined as a control position intended by the user.

In some embodiments, a direction associated with the generation of the trigger event described above (e.g., direction used as a criterion for determining whether or not the trigger event is generated) may be determined according to a type of the instruction vector (or a criterion by which the instruction vector is specified) or a distance between the motion coordinates of the control means and the control object region.

As an example, in case of the pointing vector as the instruction vector according to one embodiment of the present disclosure, a direction of the pointing vector (i.e., the direction used as a criterion for determining whether or not the trigger event is generated) may be specified with reference to a specific body portion (e.g., eye(s)) of the user. In case of the motion vector as the instruction vector, a direction of the motion vector (i.e., the direction used as a criterion for determining whether or not the trigger event is generated) may be specified with reference to a virtual reference point specified based on the motion vector (or an extension line of the motion vector). In case of the vertical vector as the instruction vector, a direction of the vertical vector (i.e., the direction used as a criterion for determining whether or not the trigger event is generated) may be specified with reference to the control object region, or may be specified with reference a virtual reference point specified based on the vertical vector (or an extension line of the vertical vector).

As another example, when the distance between the motion coordinate of the control means and the control object region is equal to or greater than a first distance (e.g., 8 cm), the direction (i.e., the direction used as a criterion for determining whether or not the trigger event is generated) may be specified with reference to a specific body portion (e.g., eye(s)) of the user. When the distance between the motion coordinate of the control means and the control object region is less than the first distance and equal to or greater than a second distance (e.g., 2.5 cm), the direction (i.e., the direction used as a criterion for determining whether or not the trigger event is generated) may be specified with reference to a virtual reference point (e.g., the virtual reference point to be specified based on the motion vector or an extension line of the motion vector). When the distance between the motion coordinate of the control means and the control object region is less than the second distance(e.g., 0 cm to less than the second distance), the direction (i.e., the direction used as a criterion for determining whether or not the trigger event is generated) may be specified with reference to the control object region, or may be specified with reference the virtual reference point (e.g., the virtual reference point to be specified based on the vertical vector or an extension line of the vertical vector). A manner of segmenting the distances in the above examples (e.g., the number of distance sections) is not necessarily limited to those described above, but the distances may be further segmented as long as the objects of the present disclosure can be achieved.

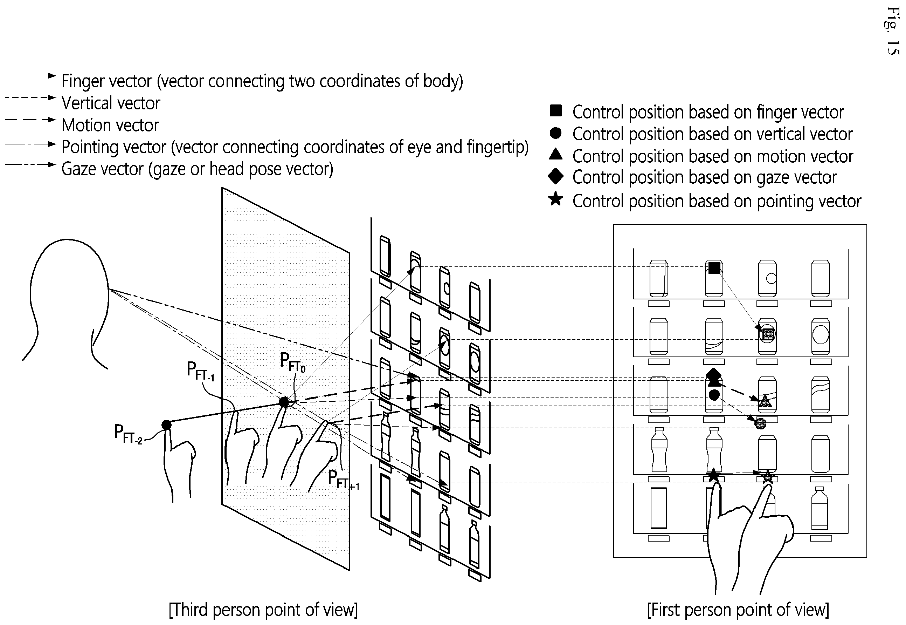

As shown in FIG. 15, when the position of the fingertip of the user is changed, a control position to be changed in the control object region may be determined with reference to a vector that connects a virtual reference point specified based on an extension line of the motion vector before the position of the fingertip is changed and a motion coordinate of the fingertip of the user after the position of the fingertip is changed. Alternatively, a control position to be changed in the control object region may be determined with reference to the aforementioned motion vector (i.e., the corrected motion vector) that is corrected based on a relationship between a first guide vector specified with reference to the motion coordinate of the fingertip of the user before the position of the fingertip is changed and a second guide vector specified with reference to a motion coordinate of the fingertip of the user after the position of the fingertip is changed. In some embodiments, a vector to be used for object control by the user among the aforementioned connection vector and the aforementioned corrected motion vector may be determined with reference to an object control pattern of the user (or an object control manner preset by the user).

### Second embodiment

Hereinafter, another situation in which the object control according to the present disclosure is assisted to the user who uses the device including the object control assistance system 100, will be described. The control means in one embodiment of the present disclosure may be the fingertip (e.g., tip of the index finger) of the user.

First, when a distance between motion coordinate of the control means and a control object region is equal to or less than a predetermined level (e.g., 2.5 cm) and a trigger event relating to movement of the control means is generated, the device according to one embodiment of the present disclosure may determine a first coordinate with reference to, as a trigger coordinate, a coordinate at a time point when the trigger event in which the fingertip moves toward the control object region and then stops is generated, among motion coordinates of the fingertip of the user.

Thereafter, a second coordinate may be determined with reference to a distance between the trigger coordinate and the motion coordinate of the fingertip of the user, and a straight line section specified by the first coordinate and the motion coordinates of the fingertip of the user.

Subsequently, the validity of a motion vector may be verified with reference at least one of a position of the first coordinate, and a length, speed, direction of a vector (i.e., the motion vector) determined based on the first coordinate and the second coordinate.

Thereafter, when the vector (i.e., the motion vector) determined based on the first coordinate and the second coordinate is invalid, a vector 1601 (i.e., the vertical vector) that passes through the trigger coordinate or the first coordinate and is perpendicular to the control object region may be determined as the instruction vector.

Referring back to FIG. 15, when the position of the fingertip of the user is changed, a control position to be changed in the control object region may be determined with reference to a vector (i.e., a connection vector) that connects a virtual reference point specified based on an extension line of the vertical vector before the position of the fingertip is changed and a motion coordinate of the fingertip of the user after the position of the fingertip is changed. Alternatively, a control position to be changed in the control object region may be determined with reference to the vertical vector (i.e., the corrected vertical vector) that is corrected based on a relationship between a first guide vector specified with reference to the motion coordinate of the fingertip of the user before the position of the fingertip is changed and a second guide vector specified with reference to a motion coordinate of the fingertip of the user after the position of the fingertip is changed. In some embodiments, a vector to be used for object control by the user among the connection vector and the corrected vertical vector may be determined with reference to an object control pattern of the user (or an object control manner preset by the user).

### Embodiment associated with specifying virtual reference point

An instruction vector may be determined at respective time points according to whether or not a trigger event is generated or a distance between motion coordinate of a control means and a control object region when the control means according to one embodiment of the present disclosure approaches or moves away from the control object region (i.e., a plurality of instruction vectors may be determined). Hereinafter, in such a case, a specific situation in which a virtual reference point and a control position are determined will be described.

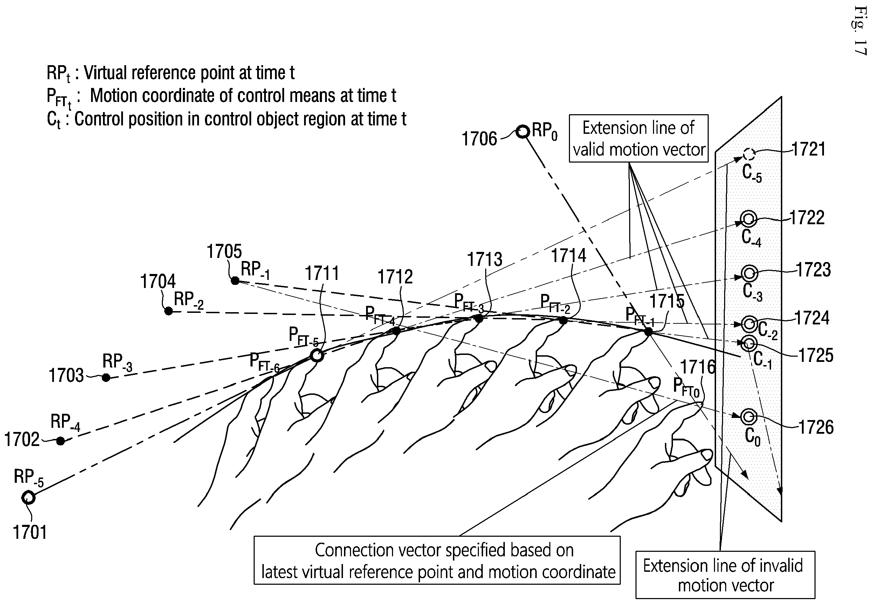

As an example, as shown in FIG. 17, it is assumed that a motion coordinate of the control means at time t is PFTt, a virtual reference point at time t is RPt, and a control position in the control object region at time t is Ct. In this case, since a motion vector is determined to be invalid at time t=-5, no virtual reference point may be specified based on the motion vector and a control position C-5 (1721) in the control object region may also not be determined. Subsequently, when the motion vector is determined to be valid at time t=-4, a virtual reference point RP-4 (1702) may be specified based on the motion vector, and a control position C-4 (1722) in the control object region may be determined based on the virtual reference point RP-4 (1702) and a motion coordinate PFT-4 (1712) of the control means. Then, when the motion vector is determined to be valid at time t=-3, a virtual reference point RP-3 (1703) may be specified based on the motion vector, and a control position C-3 (1723) in the control object region may be determined based on the virtual reference point RP-3 (1703) and a motion coordinate PFT-3 (1713) of the control means. Thereafter, when the motion vector is determined to be valid at time t=-2, a virtual reference point RP-2 (1704) may be specified based on the motion vector, and a control position C-2 (1724) in the control object region may be determined based on the virtual reference point RP-2 (1704) and a motion coordinate PFT-2 (1714) of the control means. Subsequently, when the motion vector is determined to be valid at time t=-1, a virtual reference point RP-1 (1705) may be specified based on the motion vector, and a control position C-1 (1725) in the control object region may be determined based on the virtual reference point RP-1 (1705) and a motion coordinate PFT-1 (1715) of the control means. Then, since the motion vector is determined to be invalid at time t= 0, no virtual reference point is specified based on the motion vector, and a control position C0 (1726) in the control object region may be determined based on the virtual reference point RP-1 (1705) which has been determined to be valid at the previous time (specifically, the virtual reference point which has been determined to be valid at time immediately before time t= 0 or the latest time) and a motion coordinate PFT0 (1716) of the control means.

A process of correcting a current virtual reference point based on the virtual reference point which has been determined to be valid at the previous time (specifically, the virtual reference point which has been determined to be valid at the immediately-previous time or the latest time) according to one embodiment of the present disclosure, will be described.

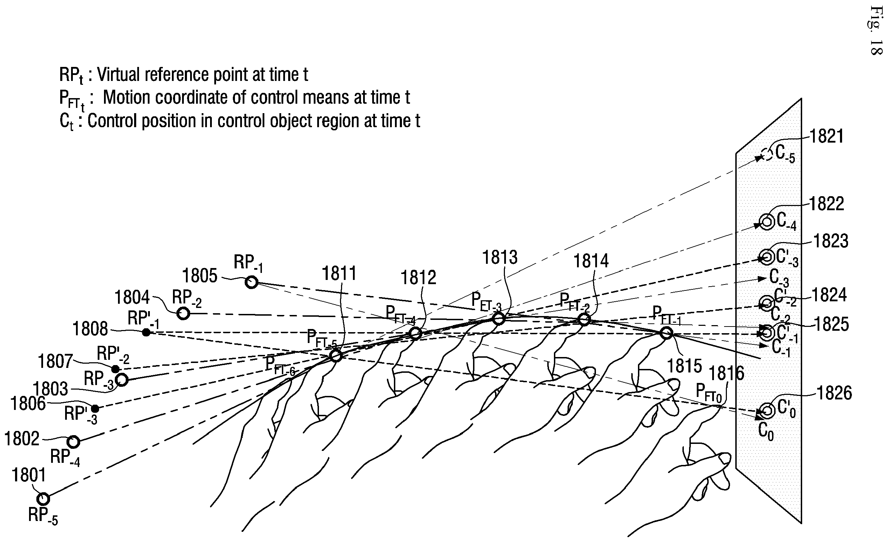

As shown in FIG. 18, first, since the motion vector is determined to be invalid at time t=-5, no virtual reference point may be specified based on the motion vector, and a control position C-5 (1821) in the control object region may also not be determined. Then, when the motion vector is determined to be valid at time t=-4, a virtual reference point RP-4 (1802) may be specified based on the motion vector, and a control position C-4 (1822) in the control object region may be determined based on the virtual reference point RP-4 (1802) and a motion coordinate PFT-4 (1812) of the control means. Subsequently, when the motion vector is determined to be valid at time t=-3, a virtual reference point RP-3 (1803) may be specified based on the motion vector, and a control position C'-3 (1823) in the control object region may be determined based on a virtual reference point RP'-3 (1806) that is specified based on the virtual reference point RP-4 (1802) which has been determined to be valid at the previous time (or the immediately-previous time) and the current virtual reference point RP-3 (1803), and a motion coordinate PFT-3 (1813) of the control means. In this case, the virtual reference point RP'-3 (1806) may be specified by statistically analyzing two coordinates of the previous virtual reference point and the current virtual reference point, and such a statistical analysis may include analysis based on an average, weighted average, variance, standard deviation of the coordinates. Subsequently, when the motion vector is determined to be valid at time t=-2, a virtual reference point RP-2 (1804) may be specified based on the motion vector, and a control position C'-2 (1824) in the control object region may be determined based on a virtual reference point RP'3 (1807) that is specified based on the virtual reference point RP'-3 (1806) which has been determined to be valid at the previous time and the current virtual reference point RP-2 (1804), and a motion coordinate PFT-2 (1814) of the control means. The virtual reference point RP'-2 (1807) may also be specified by statistically analyzing two coordinates of the previous virtual reference point and the current virtual reference point, and such a statistical analysis may include analysis based on an average, weighted average, variance, standard deviation of the coordinates. Subsequently, when the motion vector is determined to be valid at time t=-l, a virtual reference point RP-1 (1805) may be specified based on the motion vector, and a control position C'-1 (1825) in the control object region may be determined based on a virtual reference point RP'-1 (1808) that is specified based on the virtual reference point RP-2 (1807) which has been determined to be valid at the previous time and the current virtual reference point RP-1 (1805), and a motion coordinate PFT-1 (1815) of the control means. The virtual reference point RP'-1 (1808) may also be specified by statistically analyzing two coordinates of the previous virtual reference point and the current virtual reference point, and such a statistical analysis may include analysis based on an average, weighted average, variance, standard deviation of the coordinates. Then, since the motion vector is determined to be invalid at time t= 0, no virtual reference point is specified based on the motion vector, and a control position C'0 (1826) in the control object region may be determined based on the virtual reference point RP'-1 (1808) which has been determined to be valid at the previous time (specifically, the virtual reference point which has been determined to be valid at the immediately-previous time or the latest time) and a motion coordinate PFT0 (1816) of the control means.

A process of specifying a virtual reference point using only a valid motion vector according to one embodiment of the present disclosure will be described.

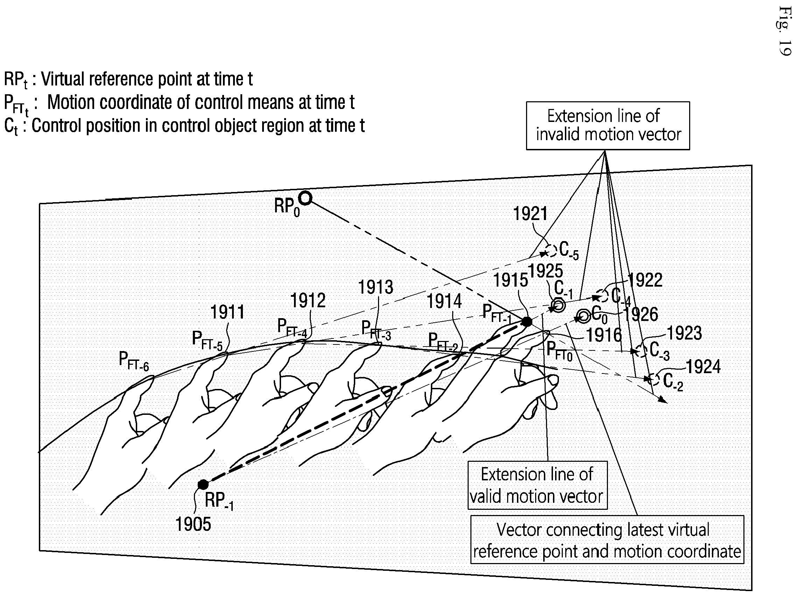

As shown in FIG. 19, first, since the motion vector is determined to be invalid at times t=-5 to t=-2, no virtual reference point is specified based on the motion vector, and control positions C-5 (1921), C-4 (1922), C-3 (1923) and C-2 (1924) in the control object region may also not be determined. Then, when the motion vector is determined to be valid at time t=-1, a virtual reference point RP-1 (1905) may be specified based on the motion vector, and a control position C-1 (1925) in the control object region may be determined based on the virtual reference point RP-1 (1905) and a motion coordinate PFT-1 (1915) of the control means. Subsequently, since the motion vector is determined to be invalid at time t=0, no virtual reference point is specified based on the motion vector, and a control position C0 (1926) in the control object region may be determined based on the virtual reference point RP-1 (1905) which has been determined to be valid at the previous time (specifically, the virtual reference point which has been determined to be valid at the immediately-previous time or the latest time) and a motion coordinate PFT0 (1916) of the control means.

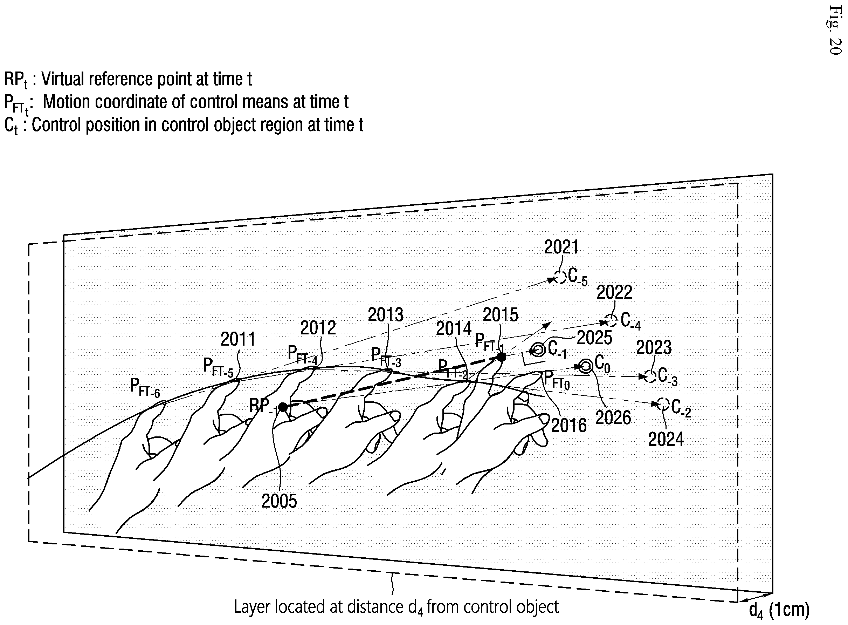

As another example, as shown in FIG. 20, it is assumed that a motion coordinate of the control means at time t is PFTt, a virtual reference point at time t is RPt, and a control position in the control object region at time t is Ct. In this case, first, since a motion vector and a vertical vector are determined to be invalid at times t=-5 to t=-2 (e.g., determined to be invalid because the distance between the control object region and the motion coordinate of the control means is equal to or greater than a predetermined level), no virtual reference point is specified based on the vectors, and control positions C-5 (2021), C-4 (2022), C-3 (2023), and C-2 (2024) in the control object region may also not be determined. Then, when the motion vector is determined to be invalid and the vertical vector is determined to be valid at time t=-1 (e.g., the distance between the control object region and the motion coordinate of the control means is determined to be less than the predetermined level), a virtual reference point RP-1 (2005) may be specified based on the vertical vector, and a control position C-1 (2025) in the control object region may be determined based on the virtual reference point RP-1 (2005) and a motion coordinate PFT-1 (2015) of the control means. Subsequently, since the motion vector and the vertical vector are determined to be invalid at time t= 0 (e.g., determined to be invalid because the distance between the control object region and the motion coordinate of the control means is equal to or greater than the predetermined level), no virtual reference point is specified based on the vectors, and a control position C0 (2026) in the control object region may be determined based on the virtual reference point RP-1 (2005) which has been determined to be valid at the previous time (specifically, the virtual reference point which has been determined to be valid at the immediately-previous time or the latest time) and a motion coordinate PFT0 (2016) of the control means.

The embodiments according to the present disclosure as described above may be implemented in the form of program instructions that can be executed by various computer components, and may be stored on a non-transitory computer-readable recording medium. The non-transitory computer-readable recording medium may include program instructions, data files, and data structures, separately or in combination. The program instructions stored on the non-transitory computer-readable recording medium may be specially designed and configured for the present disclosure, or may also be known and available to those skilled in the computer software field. Examples of the non-transitory computer-readable recording medium may include: magnetic media such as hard disks, floppy disks and magnetic tapes; optical media such as compact disk-read only memory (CD-ROM) and digital versatile disks (DVDs); magneto-optical media such as floptical disks; and hardware devices such as read only memory (ROM), random access memory (RAM) and flash memory, which are specially configured to store and execute program instructions. Examples of the program instructions may include not only machine language codes created by a compiler, but also high-level language codes that can be executed by a computer using an interpreter. The above hardware devices may be changed to one or more software modules to perform the processes of the present disclosure, and vice versa.

Although the present disclosure has been described above in terms of specific items such as detailed elements as well as the limited embodiments and the drawings, they are only provided to help more general understanding of the present disclosure, and the present disclosure is not limited to the above embodiments. It will be appreciated by those skilled in the art to which the present disclosure pertains that various modifications and changes may be made from the above description.

Therefore, the spirit of the present disclosure should not be limited to the above-described embodiments, and the entire scope of the appended claims and their equivalents will fall within the scope of the spirit of the present disclosure.

## Claims

1. A method of assisting an object control, comprising the steps of:
determining an instruction vector with reference to at least one of whether or not a trigger event relating to a movement of a control means is generated and a distance between a motion coordinate of the control means and a control object region; and
determining, when a position of the control means is changed, a control position in the control object region with reference to a vector that connects a virtual reference point specified based on an extension line of the instruction vector before the position of the control means is changed and a motion coordinate of the control means after the position of the control means is changed.

2. A method of assisting an object control, the method comprising the steps of:
determining an instruction vector with reference to at least one of whether or not a trigger event relating to a movement of a control means is generated and a distance between a motion coordinate of the control means and a control object region; and
determining, when a position of the control means is changed, a control position in the control object region with reference to the instruction vector which is corrected based on a relationship between a first guide vector specified with reference to the motion coordinate of the control means before the position of the control means is changed and a second guide vector specified with reference to a motion coordinate of the control means after the position of the control means is changed.

3. The method of Claim 1 or 2, wherein in the instruction vector determination step, when the distance between the motion coordinate of the control means and the control object region is equal to or less than a predetermined level, a first coordinate is determined with reference to, as a trigger coordinate, a coordinate at a time point when the trigger event relating to the movement of the control means is generated among motion coordinates of the control means,
a second coordinate is determined with reference to at least one of a distance between the trigger coordinate and the motion coordinates, a straight line section specified by the trigger coordinate and the motion coordinates, a distance between the first coordinate and the motion coordinates, and a straight line section specified by the first coordinate and the motion coordinates, and
a vector determined based on the first coordinate and the second coordinate is determined as the instruction vector.

4. The method of Claim 3, wherein in the instruction vector determination step, when the distance between the motion coordinate of the control means and the control object region is equal to or less than the predetermined level, or when the vector determined based on the first coordinate and the second coordinate is invalid, a vector which passes through the trigger coordinate or the first coordinate and is perpendicular to the control object region is determined as the instruction vector.

5. The method of Claim 1 or 2, wherein the in the instruction vector determination step, when the distance between the motion coordinate of the control means and the control object region is equal to or greater than the predetermined level, a vector specified based on the motion coordinate of the control means and a coordinate of a body portion of a user is determined as the instruction vector.

6. The method of Claim 1 or 2, wherein in the instruction vector determination step, a direction for specifying whether or not the trigger event relating to the movement of the control means is generated is determined according to a type of the instruction vector.

7. The method of Claim 1 or 2, wherein in the instruction vector determination step, a direction for specifying whether or not the trigger event relating to the movement of the control means is generated is determined with reference to the distance between the motion coordinate of the control means and the control object region.

8. The method of Claim 1, wherein in the control position determination step, a certain point existing on an extension line of the instruction vector in a direction opposite to a direction in which the instruction vector is oriented before the position of the control means is changed, is specified as the virtual reference point.

9. The method of Claim 2, wherein in the control position determination step, the instruction vector is corrected based on changes in position and direction between a first finger vector specified based on the motion coordinate of the control means before the position of the control means is changed and a second finger vector specified based on the motion coordinate of the control means after the position of the control means is changed.

10. A non-transitory computer-readable recording medium having stored thereon a computer program for executing the method of Claim 1 or 2.

11. A system for assisting an object control, comprising:
an instruction vector determination unit configured to determine an instruction vector with reference to at least one of whether or not a trigger event relating to a movement of a control means is generated and a distance between a motion coordinate of the control means and a control object region; and
a control position management unit configured to determine, when a position of the control means is changed, a control position in the control object region with reference to a vector that connects a virtual reference point specified based on an extension line of the instruction vector before the position of the control means is changed and a motion coordinate of the control means after the position of the control means is changed.

12. A system for assisting an object control, comprising:
an instruction vector determination unit configured to determine an instruction vector with reference to at least one of whether or not a trigger event relating to a movement of a control means is generated and a distance between a motion coordinate of the control means and a control object region; and
a control position management unit configured to determine, when a position of the control means is changed, a control position in the control object region with reference to the instruction vector which is corrected based on a relationship between a first guide vector specified with reference to the motion coordinate of the control means before the position of the control means is changed and a second guide vector specified with reference to a motion coordinate of the control means after the position of the control means is changed
